# EUROPEAN PATENT SPECIFICATION

(11) **EP 0 386 081 B1**
(45) Date of publication and mention of the grant of the patent: **02.06.1993**
(21) Application number: 88909813.3
(22) Date of filing: 14.11.1988
(51) Int. Cl.: B29D 30/20

(54) **APPARATUS AND METHOD FOR MANUFACTURING PNEUMATIC TYRES**
VORRICHTUNG UND VERFAHREN ZUM HERSTELLEN VON LUFTREIFEN
APPAREIL ET PROCEDE DE FABRICATION DE PNEUS

(30) Priority: 13.11.1987 GB 8726624
(43) Date of publication of application: 12.09.1990
(73) Proprietor: BRIDGESTONE/FIRESTONE, INC., Akron, Ohio 44317 (US)
(72) Inventor: HOLROYD, Eric, Knutsford Cheshire (GB); WRIGHT, Anthony, Richard, Lancashire PR9 7DU (GB)
(74) Representative: Dearing-Lambert, Peter Richard
(86) International application number: GB8800980
(87) International publication number: WO8904249

(56) References cited:
- DE-A- 2 917 219
- FR-A- 2 448 429
- GB-A- 2 179 307
- US-A- 3 862 871
- US-A- 4 685 992

## Description

This invention relates to an apparatus and method for manufacturing pneumatic tyres.

Conventional apparatus for manufacturing a pneumatic tyre comprises a cylindrical tyre building former having means for shaping tyre components assembled thereon at an appropriate stage to a toroidal form. The former conventionally is rotatable, includes means for supporting the various components, in particular the tyre beads, and means for moving the beads toward one-another during shaping.

As disclosed for example in US-A-3 862 871 a known method of manufacturing a pneumatic tyre comprises assembling various components such as inner liner, carcass ply, bead cores and apex strips in turn on the former as indicated above, shaping the carcass ply and inner liner to a toroidal form at the same time moving the bead cores towards one another. The carcass ply, on being shaped, contacts the radially inner surface of a tread package which includes for example breaker plies and tread rubber, the tread package having been assembled on a separate building former and then transferred to a position whereby the carcass ply may be expanded into it. Sidewalls are added at an appropriate stage and the complete green cover so formed placed in a tyre mould where moulding and curing takes place.

A tyre building former and the associated stages of the method of tyre manufacture are relatively complex and therefore expensive, and it is an object of the present invention to provide an proved apparatus and method of manufacture to attempt to reduce costs.

In accordance with one aspect of the present invention a former for the manufacture of two pneumatic tyres comprises two spaced-apart end discs, a centre shaft passing through the centres of and slideable within the end discs, two centre discs slidably mounted on the centre shaft and controllably movable toward or away from a centre plane midway between said two end discs, two cylindrical drums slidably mounted on the centre shaft, one drum being positioned between one of the centre discs and one of the end discs so that said one drum, end disc and centre disc are on the same one side of the said centre plane, and the other drum being positioned between the other centre disc and other end disc, so that said other drum, end disc and centre disc are on the other side of said centre plane, and two flexible cylindrical sleeves each mounted at each of their ends and extending between the end discs and centre discs on respective sides of the centre plane, each sleeve passing around the drums between the end discs and the centre discs.

Preferably the centre shaft comprises a hollow tube and further comprises two half-shafts detachably connected together at said centre plane. Preferably also the centre discs and/or the drums are each movable by means of a rod passing through the centre shaft.

The diameter of the end disc, drum and centre disc on each side of the centre plane are equal, but the diameters on one side of the plane may be different from the diameters on the other side of the plane, thereby enabling two tyres of different bead diameter to be manufactured simultaneously. Additionally the length of the drum on one side of the centre plane may be different from the length of the drum on the other side of the plane thereby enabling two tyres of different widths to be manufactured simultaneously.

According to another aspect of the present invention a method of manufacturing two pneumatic tyres comprises assembling on a cylindrical former, in turn, two pairs of bead toe strips in side-by-side relationship, two inner liners each liner being associated with a respective pair of toe strips so as to extend between the strips in each pair, a single carcass ply extending around the two inner liners and the two pairs of toe strips, and two pairs of bead assemblies extending around the carcass ply, each assembly being located radially outwards of a respective toe strip, locating radially outward from the carcass ply two tread packages each package being associated with a respective pair of bead assemblies, shaping the carcass ply and two inner liners from a generally cylindrical form to the shape of two toroids, the carcass ply contacting and adhering to the two tread packages, cutting the single carcass ply between the two toroids either before or after shaping, turning the four edges of the two parts of the carcass ply so formed around the four bead assemblies, one edge per assembly, and removing the two toroidal green covers devoid of sidewalls so formed from the former.

Preferably the shaping of the carcass ply to form two toroids is effected by introducing air under pressure radially inwards of each inner liner and facilitated by simultaneously moving the bead assemblies in each pair towards one another.

Sidewalls in the form of layers of rubber may be premoulded and applied to the green covers either before or after they haved been removed from the former. The green covers either with or without sidewalls may be removed from the former by separating the former into two parts and moving the covers through the gap so formed between the parts.

One embodiment of the invention will now be described, by way of example only, with reference to the accompanying diagrammatic drawings, in which:
Figure 1 is a longitudinal cross-section through a former in accordance with the invention, and
Figures 2 - 9 are partial longitudinal cross-sections through the former of Figure 1 at various stages of tyre manufacture.

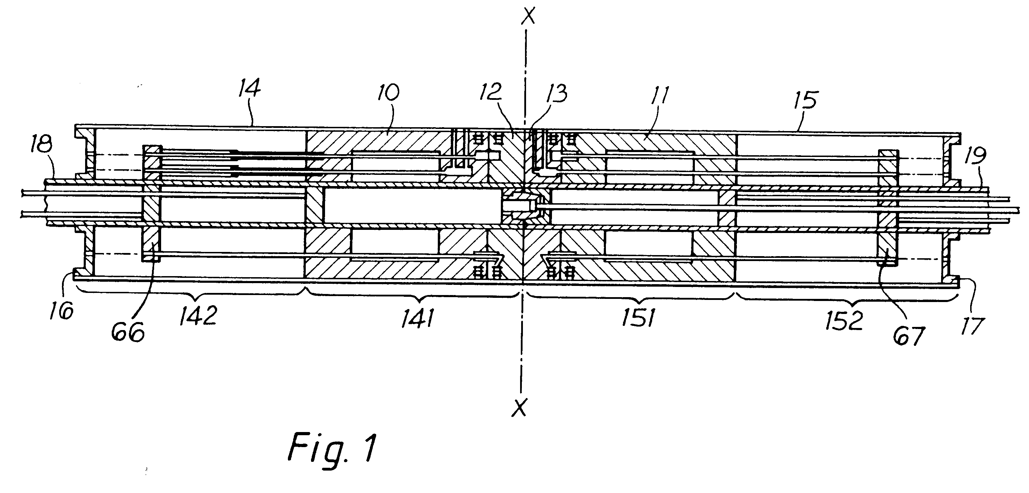

For reasons of clarity a variety of cross-sections has been incorporated in Figure 1, but various parts and/or reference numerals have been omitted but appear in other Figures.

Figure 1 shows a former in accordance with the invention in its initial state at the start of the manufacturing sequence. The former comprises two centre discs 12, 13 abutting each other on either side of a centre plane X-X. Abutting each centre disc are two cylindrical drums 10, 11 which, together with each centre disc, create two right cylinders. Two cylindrical sleeves 14, 15 are each positioned around each drum 10, 11 the drums being capable of moving freely inside the sleeves. The sleeves are secured at their edges close to the centre plane X-X to the respective centre discs 12, 13 and at their other edges to end discs 16, 17, respectively. The sleeves are made from flexible but inextensible material, e.g. canvas, in the areas 141, 151 around the drums 10, 11 and centre discs 12, 13 and from flexible and extensible material, e.g. rubber, in the areas 142, 152 beyond the drums 10, 11.

The centre discs, drums and end discs are mounted on two tubular half-shafts 18, 19 which are detachably connected together at the centre plane X-X. The former is capable of rotating around the longitidinal axis of the two half-shafts.

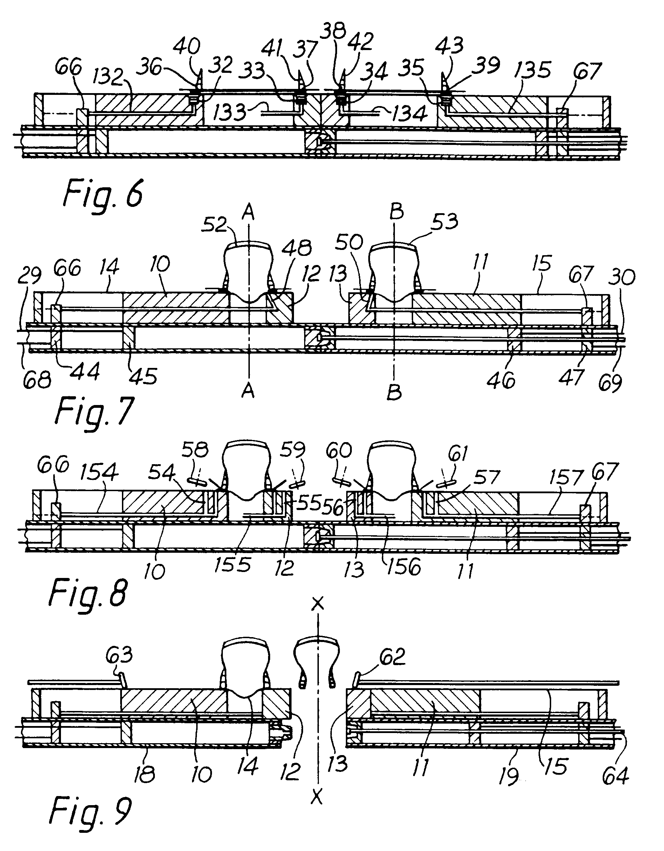

Pneumatic and electrical connections (not shown) are provided at both ends of the former by, for example, rotary air joints and electrical slip rings at the end discs 16, 17. Flexible connections are used to join the end discs 16, 17 to sliding rings 66, 67 (see Figures 6 and 7) for subsequent distribution to the appropriate parts of the former.

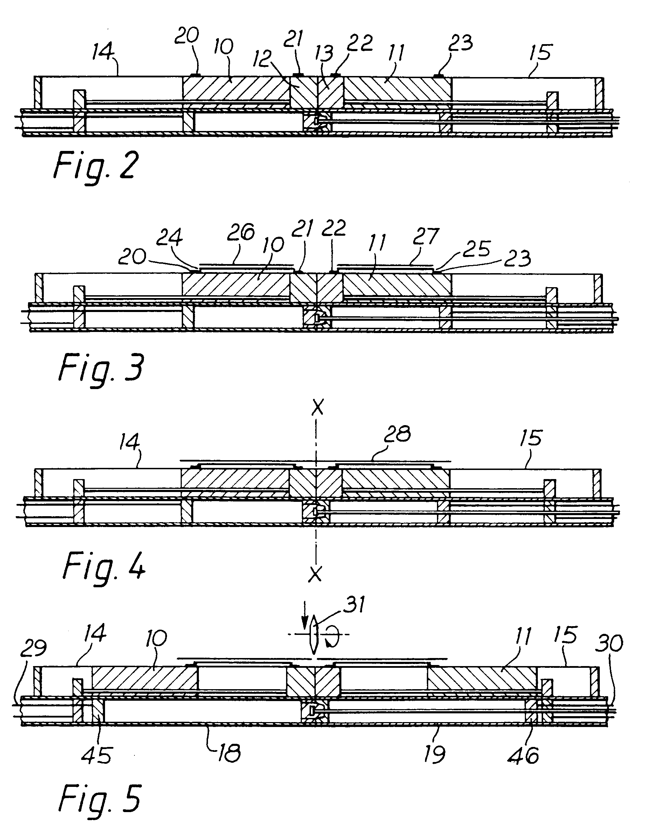

Other parts of the former will be described in the following description of the various stages of manufacture of two tyres particularly illustrated in Figures 2 - 9. In the first stage shown in Figure 2 four toe strips of rubber 20, 21, 22, 23 are wound on to the sleeves 14, 15 so as to be located radially outward of the two centre discs 12, 13 and of the two drums 10, 11 adjacent their edges further from the centre plane X-X.

In the second stage, shown in Figure 3, two first layers of inner liner 24, 25 and two second layers of inner liner 26, 27 are laid on the former so as to extend around the two drums 10, 11 and between the toe strips.

In the third stage, shown in Figure 4, a single carcass ply 28 is applied radially outward of the two inner liners, now shown as single layers. The carcass ply 28 is arranged symmetrically with respect to the centre plane X-X. Up to this stage all the components have been applied on what is effectively a right cylinder which provides full support for the sleeves 14, 15 and the components assembled thereon.

In the next stage the drums 10, 11 are moved axially outward with respect to the centre plane X-X to the position shown in Figure 5 by suitable means (not shown) acting on rods 29, 30 located within the two half-shafts 18, 19. The rods 29, 30 are connected to drums 10, 11 respectively by sliders 45, 46 moving in longitudinal slots (not shown) in the half-shafts 18, 19. The carcass ply 28, which comprises rubberised cord fabric, having cords which extend longitudinally of the formers, assists in maintaining the other components in position on the two sleeves 14, 15 relative to the centre plane X-X. The movement of the drums also tends to tension the carcass ply 28. When the former is in the position shown in Figure 5 it is rotated and a cutting disc 31 brought into contact with the carcass ply 28 at the centre plane X-X to cut it into two parts. However the cutting of the carcass ply may be delayed until a later stage.

In the next stage, shown in Figure 6, four sets of electromagnets 32, 33, 34, 35 located in the two centre discs and in the drums adjacent the edges closest to the centre plane X-X are energised and bead core assemblies 36, 37, 38, 39 wound on to the former (which is rotated as necessary) immediately radially outwards of the sets of electromagnets, respectively. Each set of electromagnets comprises a plurality of individual electromagnets equally spaced around the circumferences of the drums and the centre discs. The electric wires for carrying electric current to the electromagnet sets 32, 35 in the drums 10, 11 are run through rigid tubes 132, 135 to rings 66, 67 respectively and through flexible tubes to end discs 16, 17 respectively. The electric wires for carrying electric current to the electromagnet sets 33, 34 are run through rigid tubes 133, 134 (only partially shown in Figure 6) to drums 10, 11. The wires are supported by telescopic tubes between drums 10, 11 and rings 66, 67 respectively and then through flexible tubes to end discs 16, 17. A conventional type of slip ring connector may be used to transmit electric power to the rotatable end discs 16, 17 from an external source.

The electromagnet sets are used initially to locate the bead cores in position on the former during winding but they are also used during later stages to assist in preventing displacement. It will be appreciated that the diameter of the former drums and discs and the thickness of the sleeves and tyre components assembled thereon will be such that the resultant total diameter on which the bead core is wound results in a predetermined inner diameter of the bead core. The cores are preferably of steel wire insulated in rubber. Bead apices 40, 41, 42, 43 are wound radially outward of the bead cores 36, 37, 38, 39 respectively. Additional support may be provided to prevent movement of the bead cores and apices during the later stages of tyre manufacture, in the form of four sets of radially expanding supports radially inward of the positions where the toe strips 20, 21, 22, 23 were applied on the centre discs and drums. The carcass ply 28, if not already cut, may be cut at this stage after application of the bead apices.

In the next stage, shown in Figure 7, the two parts of the carcass ply are shaped. The rods 29, 30 are moved to push the drums 10, 11 respectively toward the centre plane X-X while the centre discs 12, 13 are moved away from the centre plane by an equal distance. The movement of the centre discs is effected by moving rods 68, 69 connected to sliders 44, 47 attached to rings 66, 67 via longitudinal slots in the half-shafts 18, 19. The air and electric wire support tubes 133, 134 connecting the rings 66, 67 to the centre discs 12, 13 also serve as rigid connections to transmit motion between the centre discs and the rings. As a result one drum 10 and the associated centre disc 12 both on the same side of the centre plane X-X move toward one another at an equal and controlled rate with respect to a plane A-A midway between the toe strips 20, 21 originally applied. An identical motion occurs on the other side of the centre plane X-X, the other centre disc 13 and other drum 11 both moving toward one another with respect to a plane B-B midway between the toe strips 22, 23 originally applied, at the same equal and controlled rate.

Simultaneously with the motion of the centre discs 12, 13 and the drums 10, 11 a variable and controlled air pressure is applied through a plurality of air holes 48, 50 equally spaced apart around the circumference of the centre discs 12, 13 respectively via holes in the sleeves 14, 15 thus causing inflation of the two parts of the carcass ply 28. The rate of inflation is controlled by monitoring air pressure within the two parts of the carcass ply via single orifices (not shown) in discs 12, 13. The orifices are separate from the inflation holes 48, 50. The air holes 48, 50 and orifices are connected via rigid tubes to rings 66, 67 as previously described. The sleeves 14, 15 each act as an air seal to the inner parts of the former while the bead cores by virtue of the fact that they have been wound on the other rubber components form an air-tight seal between the carcass ply and the respective sleeve.

The shaping of the two parts of the carcass ply takes place within two tread carrying rings (not shown) each containing a tread package 52, 53 comprising at least tread rubber and breakers and each positioned symmetrically with respect to the planes A-A and B-B respectively.

In the next stage shown in Figure 8 the edges of the two parts of the carcass ply are turned up around the respective bead cores. The whole former, with the carcases and treads thereon, is rotated while air pressure is maintained within the toroidally shaped carcasses. A plurality of radially oriented holes paired in four sets 54, 55, 56, 57 in the drums 10, 11 and centre discs 12, 13 pass air to lift the edges away from the sleeves while the whole assembly rotates. Air is supplied to the hole sets 54, 55, 56, 57 via a set of pipes 154, 155, 156, 157 connected to the rings 66, 67 in a similar manner to the rigid tubes through which inflationary air is passed. Four conventional types of spinner arrangements 58, 59, 60, 61 are then brought into operation to turn up the ply edges.

In the final stage, shown in Figure 9, the two green covers, devoid of sidewall rubber, so formed are removed from the former. A rod 64 located centrally within one half-shaft 19 is rotated to unlock a bayonet type fitting connecting the two half-shafts 18, 19 together. The two half-shafts are then separated by pulling them axially apart until their inner ends coincide with centre discs 12, 13. The electromagnet sets 32, 33, 34, 35 are de-energised and the inflation pressure released.

Considering one side only of the former, one drum 11 is moved toward the centre plane X-X until it abuts centre disc 13. A ring 62 around the sleeve 15 is simultaneously moved axially toward the centre plane X-X and pushes the green cover, devoid of sidewalls, toward the gap formed between the two centre discs 12, 13. The cover is removed through this gap. The movements of the ring 62 and drum 11 are sequenced so that the tyre bead is partially released from the drum before the drum 11 abuts centre disc 13. This enables the extensible part 152 of the sleeve 15, which is fully extended at this stage, to pull the non-extensible part 151 of the sleeve clear before the drum 11 abuts the centre disc 13. The green cover is taken away supported in the tread carrying ring.

The removal of the second green cover from the other side of the centre plane X-X is carried out in a similar manner using a second ring 63. Sidewalls, which may be premoulded, may be fitted to the green covers so formed in a separate operation before being moulded and cured to form complete tyres.

To complete the cycle of operation of the former, the two parts of the former are rejoined. The two half-shafts 18, 19 are moved toward one another until their ends meet at the centre plane X-X. The centrally located rod 64 is rotated to lock the bayonet type fitting. It is important to ensure that both parts of the former are accurately aligned and rotate concentrically about the longitudinal axis, whilst there is no deflection along the axis. These effects are minimised by means of a tapered plug unit at the connection between the two half-shafts 18, 19 and the bayonet-type fitting referred to above.

The drum 10 and centre disc 12, and other drum 11 and other centre disc 13, are then moved toward centre plane X-X until they are all in abutting relationship as shown in Figures 1 and 2.

The description above refers to the manufacture of two tyres simultaneously. However it is possible to use the two parts of the former separately.

It is to be appreciated that other tyre components, e.g. chafer strips may additionally be incorporated in the tyres being manufactured.

## Claims

1. A former for the manufacture of two pneumatic tyres comprising two spaced-apart end discs (16,17), a centre shaft (18,19) passing through the centres of and slideable within the end discs (16,17), two centre discs (12,13) slidably mounted on the centre shaft (18,19) and controllably movable toward or away from a centre plane (x - x) mid-way between said two end discs (16,17), two cylindrical drums (10,11) slidably mounted on the centre shaft (18,19), one drum (10) being positioned between one of the centre discs (12) and one of the end discs (16) so that said one drum (10), end disc (16) and centre disc (12) are on the same one side of the said centre plane (x - x), and the other drum (11) being positioned between the other centre disc (13) and other end disc (17), so that said other drum (11), end disc (17) and centre disc (13) are on the other side of said centre plane (x - x), and two flexible cylindrical sleeves (14,15) each mounted at each of their ends and extending between the end discs (16,17) and centre discs (12,13) on respective sides of the centre plane (x - x), each sleeve (14,15) passing around the drums (10,11) between the end discs (10,17) and the centre discs (12,13).

2. A former as claimed in claim 1, characterised in that the centre shaft (18,19) comprises a hollow tube.

3. A former as claimed in claim 1 or claim 2, characterised in that the centre shaft comprises two half-shafts (18 and 19) detachably connected together at said centre plane (x - x).

4. A former as claimed in any one of the preceding claims, characterised in that the centre discs are each movable by means of a rod (68 or 69).

5. A former as claimed in any one of the preceding claims, characterised in that the drums (10,11) are each movable by means of a rod (29 or 30).

6. A former as claimed in any one of the preceding claims, characterised in that the diameters of the end disc (16), drum (10) and centre disc (12) on each side of the centre plane (x - x) are equal but different from the diameters of the end disc (17), drum (11) and centre disc (13) on the other side of the centre plane (x - x).

7. A former as claimed in any one of the preceding claims, characterised in that the length of the drum (10) on one side of the centre plane (x - x) is different from the length of the drum (10)on the other side of the plane (x -x).

8. A former as claimed in any one of the preceding claims, characterised by comprising electromagnetic means (32,33,34,35) on the drums (10,11) and centre discs (12,13) for locating bead cores (36,37,38,39) during manufacture of the tyres.

9. A former as claimed in any one of the preceding claims, characterised by comprising support means for preventing axial movement of bead cores (36,37,38,39) during manufacture of the tyres.

10. A former as claimed in any one of the preceding claims, characterised by comprising air pressurising means (48,50) for shaping the tyres during manufacture.

11. A former as claimed in any one of the preceding claims, characterised in that the part (141,151) of each sleeve (14,15) around a respective drum is flexible but inextensible and the remaining part (142,152) of each sleeve (14,15) is flexible and extensible.

12. A method of manufacturing two pneumatic tyres comprising assembling on a cylindrical former, in turn, two pairs of bead toe strips (20,21 and 22,23) in side-by-side relationship, two inner liners (24,26 and 25,27) each liner being associated with a respective pair of toe strips so as to extend between the strips in each pair, a single carcass ply (28) extending around the two inner liners and the two pairs of toe strips, and two pairs of bead assemblies (36,37 and 38,39) extending around the carcass ply, each assembly being located radially outwards of a respective toe strip, locating radially outward from the carcass ply two tread packages (52,53) each package being associated with a respective pair of bead assemblies, shaping the carcass ply (28) and two inner liners (24,26 and 25,27) from a generally cylindrical form to the shape of two toroids, the carcass ply (28) contacting and adhering to the two tread packages (52,53), cutting the single carcass ply (28) between the two toroids either before or after shaping, turning the four edges of the two parts of the carcass ply (28) so formed around the four bead assemblies (36,37 and 38,39), one edge per assembly, and removing the two toroidal green covers devoid of sidewalls so formed from the former.

13. A method as claimed in claim 12, characterised in that the shaping of the carcass ply (28) to form two toroids is effected by introducing air under pressure radially inwards of the inner liners (24,26 and 25,27).

14. A method as claimed in claim 12 or claim 13, characterised in that the shaping of the carcass ply (28) to form two toroids is facilitated by moving the bead assemblies (36,37 and 38,39) in each pair toward one another.

15. A method as claimed in any one of claims 12 - 14 characterised by comprising applying sidewalls in the form of layers of rubber to the green covers before removal from the former.

16. A method as claimed in any one of claims 12 - 15 characterised by comprising premoulding sidewalls in the form of layers of rubber and applying them to the green covers.

17. A method as claimed in any one of claims 12 - 15 characterised by comprising separating the former into two parts and removing the green covers through the gap formed between the parts.

## Patentansprüche

1. Formvorrichtung zum Herstellen von zwei Luftreifen, umfassend zwei voneinander beabstandete Endscheiben (16,17), einen Zentrumsschaft (18,19), der durch die Zentren der Endscheiben hindurchverläuft und darin verschiebbar gelagert ist, zwei Zentrumsscheiben (12,13), die verschiebbar auf dem Zentrumsschaft (18,19) gelagert und steuerbar in Richtung auf eine Zentrumsebene (x-x) zu und von ihr weg in der Mitte zwischen den beiden Endscheiben (16,17) bewegbar sind,
zwei zylindrische Trommeln (10,11), die verschiebbar auf dem Zentrumsschaft (18,19) gelagert sind, wobei eine Trommel (10) zwischen einer der Zentrumsscheiben (12) und einer der Endscheiben (16) positioniert ist, so daß diese eine Trommel (10), die Endscheibe (16) und die Zentrumsscheibe (12) auf der gleichen Seite der Zentrumsebene (x-x) sind und die andere Trommel (11) zwischen der anderen Zentrumsscheibe (13) und der anderen Endscheibe (17) positioniert ist, so daß die andere Trommel (11), Endscheibe (17) und die Zentrumsscheibe (13) auf der anderen Seite der Zentrumsebene (x-x) sind, und wobei zwei flexible zylindrische Buchsen (14,15) jeweils an jedem ihrer Enden gelagert sind und sich zwischen den Endscheiben (16,17) und den Zentrumsscheiben (12,13) an der entsprechenden Seite der Zentrumsebene (x-x) erstrecken, wobei jede Buchse (14,15) um die Trommeln (10,11) zwischen den Endscheiben (10,17) und den Zentrumsscheiben (12,13) herumverläuft.

2. Formvorrichtung nach Anspruch 1, dadurch gekennzeichnet, daß der Zentrumsschaft (18,19) ein hohles Rohr umfaßt.

3. Formvorrichtung nach Anspruch 1 oder Anspruch 2, dadurch gekennzeichnet, daß der Zentrumsschaft zwei halbe Schäfte (18 und 19) umfaßt, die wieder lösbar an der Zentrumsebene (x-x) miteinander verbunden sind.

4. Formvorrichtung nach irgendeinem der vorstehenden Ansprüche, dadurch gekennzeichnet, daß die Zentrumsscheiben jeweils mittels einer Stange (68 oder 69) bewegbar sind.

5. Formvorrichtung nach irgendeinem der vorstehenden Ansprüche, dadurch gekennzeichnet, daß die Trommeln (10, 11) jeweils mittels einer Stange (29 oder 30) bewegbar sind.

6. Formvorrichtung nach irgendeinem der vorstehenden Ansprüche, dadurch gekennzeichnet, daß die Durchmesser der Endscheibe (16) der Trommel (10) und der Zentrumsscheibe (12) an jeder Seite der Zentrumsebene (x-x) gleich sind, sich jedoch von den Durchmessern der Endscheibe (17), der Trommel (11) und der Zentrumsscheibe (13) an der anderen Seite der Zentrumsebene (x-x) unterscheiden.

7. Formvorrichtrnng nach irgendeinem der vorstehenden Ansprüche, dadurch gekennzeichnet, daß die Länge der Trommel (10) an der einen Seite der Zentrumsebene (x-x) von der Länge der Trommel (10) an der anderen Seite der Ebene (x-x) abweicht.

8. Formvorrichtung nach irgendeinem der vorstehenden Ansprüche, gekennzeichnet durch elektromagnetische Mittel (32,33,34,35) auf den Trommeln (10,11) und den Zentrumsscheiben (12,13) zur Anordnung von Wulstkernen (36,37,38, 39) während der Herstellung von Reifen.

9. Formvorrichtung nach irgendeinem der vorstehenden Ansprüche, gekennzeichnet durch Tragmittel zur Verhinderung der Axialbewegung der Wulstkerne (36,37,38,39) während der Herstellung der Reifen.

10. Formvorrichtung nach irgendeinem der vorstehenden Ansprüche, gekennzeichnet durch luftdruckerzeugende Mittel (48,50) zur Formung der Reifen während der Herstellung.

11. Formvorrichtung nach irgendeinem der vorstehenden Ansprüche, dadurch gekennzeichnet, daß der Teil (141,151) jeder Buchse (14,15) um eine entsprechende Trommel flexibel, jedoch nicht dehnbar ist, und der übrige Teil (142,152) jeder Buchse (14,15) flexibel und dehnbar ist.

12. Verfahren zum Herstellen von zwei Luftreifen, umfassend den Aufbau auf einer zylindrischen Formvorrichtung, der Reihenfolge nach, von zwei Paaren von wulstzehenstreifen (20,21 und 22,23) in nebeneinanderliegender Beziehung von zwei Innerlinern (24,26 und 25,27), wobei jeder Liner zu einem entsprechenden Zehenstreifenpaar gehört, und sich zwischen den Streifen in jedem Paar erstreckt, von einer einzigen Karkassenlage (28), die sich um die beiden Innerliner und die beiden Zehenstreifenpaare erstreckt, und wobei zwei Paare von Wulstanordnungen (36,37 und 38,39) sich um die Karkassenlage herum erstrecken und jede Anordnung radial außerhalb eines entsprechenden Zehenstreifens angeordnet wird, und wobei radial außerhalb von der Karkassenlage zwei Laufflächenpakete (52,53) angeordnet werden und jedes Paket zu einem entsprechenden wulstanordnungspaar gehört, und wobei die Karkassenlage (28) und die beiden Innerliner (24,26 und 25,27) aus einer generell zylindrischen Form in die Form zweier Toroide bzw. ringförmiger Körper gebracht wird, in der die Karkassenlage (28) die beiden Laufflächenpakete (52,53) berührt und an ihnen festhält, und wobei die einzige Karkassenlage (28) zwischen den beiden Toroiden entweder vor oder nach ihrer Formung durchgeschnitten wird und die vier Kanten der beiden Teile der so gebildeten Karkassenlage (28) um die vier Wulstanordnungen (36,37 und 38,39), eine Kante pro Anordnung, herumgedreht werden, und wobei die zwei toroidalen grünen Decken, frei von Seitenwänden, die so auf der Formvorrichtung geformt worden sind, entfernt werden.

13. Verfahren nach Anspruch 12, dadurch gekennzeichnet, daß die Formung der Karkassenlage (28) unter Bildung der zwei Toroide durchgeführt wird, indem unter Druck stehende Luft radial innerhalb der Innerliner (24,26 und 25,27) eingeführt wird.

14. Verfahren nach Anspruch 12 oder Anspruch 13, dadurch gekennzeichnet, daß die Formung der Karkassenlage (28) unter Bildung der beiden Toroide erleichtert wird durch Bewegen der Wulstanordnungen (36,37 und 38,39) in jedem Paar aufeinander zu.

15. Verfahren nach irgendeinem der Ansprüche 12 bis 14, gekennzeichnet durch die Anbringung der Seitenwände in Form von Gummischichten auf die grünen Decken vor der Entfernung aus der Formvorrichtung.

16. Verfahren nach irgendeinem der vorstehenden Ansprüche 12 bis 15, gekennzeichnet durch die Vorformung der Seitenwände in Form von Gummischichten und Auftragen derselben auf die grünen Decken.

17. Verfahren nach irgendeinem der Ansprüche 12 bis 15, gekennzeichnet durch die Trennung der Formvorrichtung in zwei Teile und Entfernen der grünen Decken durch den zwischen den Teilen geformten Spalt.

## Revendications

1. Matrice de fabrication de deux pneumatiques, comprenant deux disques d'extrémité (16, 17) placés à distance l'un de l'autre, un arbre central (18, 19) passant par le centre et coulissant à l'intérieur des disques d'extrémité (16, 17), deux disques centraux (12, 13) montés coulissants sur l'arbre central (18, 19) et commandés de manière à être rapprochés ou éloignés d'un plan central (x-x) situé au milieu entre les deux disques d'extrémité (16, 17), deux tambours cylindriques (10, 11) montés coulissants sur l'arbre central (18, 19), un tambour (10) étant positionné entre l'un (12) des disques centraux et l'un (16) des disques d'extrémité de manière que ce tambour (10), ce disque d'extrémité (16) et ce disque central (12) soient sur le même côté dudit plan central (x-x), et l'autre tambour (11) étant positionné entre l'autre disque central (13) et l'autre disque d'extrémité (17) de manière que lesdits autres tambour (11), disque d'extrémité (17) et disque central (13) soient sur l'autre côté dudit plan central (x-x) et deux manchons cylindriques souples (14, 15), dont chacun est monté à chacune des extrémités et qui sont disposés entre les disques d'extrémité (16, 17) et les disques centraux (12, 13) sur les côtés respectifs du plan central (x-x), chaque manchon (14, 15) passant autour des tambours (10, 11) entre les disques d'extrémité (10, 17) et les disques centraux (12, 13).

2. Matrice selon la revendication 1, caractérisée en ce que l'arbre central (18, 19) consiste en un tube creux.

3. Matrice selon la revendication 1 ou la revendication 2, caractérisée en ce que l'arbre central se compose de deux demi-arbres (18 et 19) reliés de manière amovible l'un à l'autre sur ledit plan central (x-x).

4. Matrice selon l'une quelconque des revendications précédentes, caractérisée en ce que chacun des disques centraux est déplaçable au moyen d'une tige (68 ou 69).

5. Matrice selon l'une quelconque des revendications précédentes, caractérisée en ce que chacun des tambours (10, 11) est déplacable au moyen d'une tige (29 ou 30).

6. Matrice selon l'une quelconque des revendications précédentes, caractérisée en ce que les diamètres du disque d'extrémité (16), du tambour (10) et du disque central (12) situés sur l'un des côtés du plan central (x-x) sont indentiques, mais sont différents des diamètres du disque d'extrémité (17), du tambour (11) et du disque central (13) situés sur l'autre côté du plan central (x-x).

7. Matrice selon l'une quelconque des revendications précédentes, caractérisée en ce que la longueur du tambour (10) situé d'un côté du plan central (x-x) est différente de la longueur du tambour (10) situé de l'autre côté du plan central (x-x).

8. Matrice selon l'une quelconque des revendications précédentes, caractérisée en ce qu'elle comprend des moyens électromagnétiques (32, 33, 34, 35) placés sur les tambours (10, 11) et les disques centraux (12, 13) pour positionner des tringles de talon (36, 37, 38, 39) pendant la fabrication des pneumatiques.

9. Matrice selon l'une quelconque des revendications précédentes, caractérisée en ce qu'elle comprend des organes de support pour empêcher un mouvement axial des tringles de talon (36, 37, 38, 39) pendant la fabrication des pneumatiques.

10. Matrice selon l'une quelconque des revendications précédentes, caractérisée en ce qu'elle comprend des moyens de compression d'air (48, 50) pour mettre en forme les pneumatiques pendant la fabrication.

11. Matrice selon l'une quelconque des revendications précédentes, caractérisée en ce que la partie (141, 151) de chaque manchon (14, 15) qui entoure un tambour correspondant est souple mais non extensible et le reste (142, 152) de chaque manchon (14, 15) est souple et extensible.

12. Procédé de fabrication de deux pneumatiques, consistant à assembler sur une matrice cylindrique successivement deux paires de bandes de renfort de talon (20, 21 et 22, 23) placées côte à côte, deux chemises intérieures (24, 26 et 25, 27), chaque chemise étant associée à une paire correspondante de bandes de renfort de manière à être placée entre les bandes de chaque paire, un unique pli de carcasse (28) disposé autour des deux chemises intérieures et des deux paires de bandes de renfort et deux paires d'ensembles de talon (36, 37 et 38, 39) placées autour du pli de carcasse, chaque ensemble étant placé radialement à l'extérieur d'une bande correspondante de renfort, ledit procédé consistant par ailleurs à placer radialement à l'extérieur du pli de carcasse deux empilements de bande de roulement (52, 53), chaque empilement étant associé à une paire correspondante d'ensembles de talon, à faire passer le pli de carcasse (28) et les deux chemises intérieures (24, 26 et 25, 27) d'une forme généralement cylindrique à la forme de deux tores, le pli de carcasse (28) entrant en contact avec et adhérant aux deux empilements de bande de roulement (52, 53), à couper l'unique pli de carcasse (28) entre les deux tores soit avant, soit après la mise en forme, à faire tourner les quatre bords des deux parties du pli de carcasse (28) ainsi formées autour des quatre ensembles de talon (36, 37 et 38, 39), un bord par ensemble, et à enlever de la matrice les deux enveloppes toroïdales crues ainsi formées et ne comportant pas de flancs.

13. Procédé selon la revendication 12, caractérisé en ce que la mise en forme du pli de carcasse (28) en deux tores est effectuée par introduction d'air sous pression radialement à l'intérieur des chemises intérieures (24, 26 et 25, 27).

14. Procédé selon la revendication 12 ou 13, caractérisé en ce que la mise en forme du pli de carcasse (28) en deux tores est facilitée par le déplacement des ensembles de talon (36, 37 et 38, 39) de chaque paire l'un vers l'autre.

15. Procédé selon l'une quelconque des revendications 12 - 14, caractérisé en ce qu'il consiste à appliquer des flancs ayant la forme de couches de caoutchouc sur les enveloppes crues avant de les enlever de la matrice.

16. Procédé selon l'une quelconque des revendications 12 - 15, caractérisé en ce qu'il consiste à effectuer un prémoulage des flancs en forme de couches de caoutchouc et à les appliquer sur les enveloppes crues.

17. Procédé selon l'une quelconque des revendications 12 - 15, caractérisé en ce qu'il consiste à séparer la matrice en deux parties et à enlever les enveloppes crues par l'intervalle formé entre ces parties.
